# EUROPEAN PATENT APPLICATION

(11) **EP 1 719 612 A1**
(43) Date of publication of application: **08.11.2006**
(21) Application number: 05103670.5
(22) Date of filing: 03.05.2005
(51) Int. Cl.: B29D 11/00, G02B 1/04

(54) **Method of and apparatus for moulding optical components**

(71) Applicant: Vision Dynamics Holding B.V., 5691 JA Son (NL)
(72) Inventor: de Wilt, Teun Petrus Adrianus, 5621 AJ, Eindhoven (NL); van Bree, Maarten Johan Mathijs, NL-5508 CK Veldhoven (NL)
(74) Representative: Smeets, Eugenius Theodorus J. M.

(57) **Abstract**

A method of and apparatus for moulding optical components uses a thermo-curable composition, which has unconventional low shrinkage and can be heated to high temperature so that it can be cured at unconventional fast rate with relative simple means. This allows fast production of optical components at low cost both in small quantities and in large quantities.

## Description

The invention relates to a method of moulding optical components, which method comprises the steps of:
- providing a polymerizable component forming composition;
- providing a mould assembly comprising at least one mould member having a moulding surface profile, which corresponds to a required surface profile of the component to be formed;
- loading a required amount of the composition in the mould assembly;
- causing the composition to polymerise in the mould assembly so that it solidifies to a solid component having a shape corresponding to the profile of the at least one mould member, and
- removing the solidified component from the mould assembly

The invention also relates to a system, which is suitable for performing this method.

Human-sight improving lenses, or ophthalmic lenses, such as eye-glass lenses and contact lenses have historically been made by machining a lens material, in button (or block form) on front and back surfaces thereof to produce an unfmished lens product having the required fit, or "base curve" and visual correction to compensate for one or more refractive abnormalities of the eye. Such refractive abnormalities may include myopia (nearsightedness), hypermetropia (farsightedness), astigmatism, presbyopia and the like. Using conventional machining technology, the optic faces of the unfinished lens require polishing in order to remove rings, known as "turning rings", on the unfinished lens that have been created by the machining process.

Since the machining process is very labour-intensive it is preferred to manufacture lenses by moulding plastic. Plastic has been chosen for its light weight, density, refractive index and impact resistance. To form a lens, two mould members, often referred to as a front mould and a back mould in the art of lens making, are used, which together form a mould assembly. Each mould member has an inside, preferably polished, surface, which faces the other mould member. When these mould members are properly positioned at a desired distance and rotational orientation to each other, they define a mould cavity wherein the plastic can be loaded. The polished inside surfaces of the mould members, usually called moulding surfaces, are mirror images of the main surfaces of the lens to be formed. A fluid lens-forming mixture, or composition, normally a liquid monomer, is loaded and contained in the cavity defined by the two mould members. Once the fluid lens-forming composition is in the cavity, it is cured to form a hardened polymeric lens taking the shape of the moulds, whereby the main lens surfaces are replicas of the polished surfaces of the mould members.

Curing of the lens-forming composition, i.e. polymerising the monomer composition can be performed by irradiating the composition with ultraviolet (UV) radiation, as described in, for example U.S. patent 6,790,022. The specification of this patent and of a number of related patents having the same filing date and the same assignee includes a very extensive description of a lens forming process and -system, using injection moulding. The lens-forming composition used in the process of U.S. patent 6,790,022 comprises, in addition to a monomer, a co-initiator composition configured to activate curing of the monomer and a photoinitiator configured to activate the co-initiator composition in response to being exposed to activating radiation. The lens-forming composition may also include other components such as UV radiation absorbers and photochromic compounds. Curing by means of UV radiation has the main advantage that it can be performed in a short time interval. However, it also presents some problems that must be overcome to produce a viable lens. Such problems include yellowing of the lens, cracking of the lens or mould members, optical distortion in the lens and premature release of the lens from the mould members. Due to the relative rapid nature of UV radiation initiated reactions, it is a challenge to provide a composition that is UV radiation curable to form an eyeglass lens. Excessive exothermic heat tends to cause defects in the cured lens. To avoid such defects, the level of photoinitiator may be reduced to levels below what is customarily employed in the UV radiation curing art.

While reducing the level of photoinitiator addresses some problems, it may also cause others, for example incomplete curing especially in regions near the edge of the lens. This may result in a lens having a "wet" edge covered by sticky uncured lens-forming composition. Furthermore, uncured lens-forming composition may migrate to and contaminate the optical surface of the lens upon de-moulding.

To improve the curing, or polymerisation, process it is proposed in U.S. patent 6,790,022 to combine UV radiation with heat. It is stated that by means of the combination of UV radiation and heat a lens can be formed within thirty minutes. In one embodiment, the lens-forming composition may be exposed to continuous activating UV radiation to initiate curing and subsequently the composition may be treated with additional activating radiation and heat to further cure the composition. In another embodiment, the lens-forming composition may be exposed in a heated curing chamber to initiate curing of the composition and subsequently the composition may be treated with additional activating radiation and heat to further cure the composition. The subsequent curing is carried out in an additional curing chamber so that a complex and large moulding machine is needed.

A main problem that occurs typically when the lens-forming composition is rapidly heated during curing is shrinkage of the composition. In U.S. Patent 6,790,022 it is proposed to solve this problem by configuring the composition such that it exhibits increased adhesion to the moulds and reduces the incidence of premature release. The increased adhesion of the lens-forming composition may allow higher curing temperatures to be used. In the description of U.S. patent 6,790,022 it is furthermore believed that the specific lens-forming composition may exhibit less shrinkage, however a shrinkage value is not mentioned.

A well-known alternative for UV curing is thermo-curing, i.e. curing by heat. A thermo-curing process and apparatus is described in a number of documents, for example U.S. Patent 4,840,754, which is concerned with moulding products such as ophthalmic lenses comprised of thermo-curing materials including thermo-setting and thermo-plastic materials. After the mouldable material such as polymethyl methacrylate, silicone rubber or hydrogel polymers has been supplied to the mould cavity between two mould members of the moulding apparatus, at least one of the mould members is heated by electrical heaters so that the curing is accelerated and the curing time reduced. The curing temperature is, for example, 150° C and the curing time is, for example about 15 minutes. The problem of shrinkage of the mouldable material is not addressed.

The manufacture of ophthalmic lenses nowadays is an intricate and time consuming process, which requires dedicated large and expensive apparatus. Therefor such lenses are manufactured at a few specialised sites where a huge number of lenses are made to be shipped to so called Rx labs, which make the final, or fmished, lens upon request of, for example optical, or optician, shops. These shops order specified lenses, whereby the specification is based on measurement of customer eyes, which measurement is performed by an oculist or the optician. Due to this complicated sequence, the customer receives the required eyeglass lens only after a few days at fastest.

It is an object of the present invention to make a breakthrough in the technology of manufacturing ophthalmic lenses and other optical products and to provide a method of fast moulding optical components, which method can be performed easily by simple means and at low costs. This method is characterized in that,
- the step of providing a polymerizable composition comprises providing a thermo-curable composition having unconventional low shrinkage;
- the step of causing the composition to polymerise comprises fast heating the composition to a temperature higher than 110° C so that the composition solidifies at an unconventional fast rate, and
- the step of removing comprises cooling down the solidified component and releasing it from the at least one mould member.

The invention is based on the insight that it would be very attractive to decentralise the ophthalmic lens manufacture and makes an inventive and very effective use of recent developments in the art of lens-forming compositions. These developments have resulted in a new type of such a composition showing a unique combination of attractive properties. These properties are:
- superior optical qualities similar to those of, for example diethylene bis allyl carbonate (ADC), which is a well-known hard resin lens material;
- low viscosity;
- very fast polymerisation at high temperatures, and
- a very low shrinkage.
The combination of these properties allows for the design of a new and simple method of producing a lens or other optical component, which method can be carried out by means of relative simple and low-cost means and allows very fast moulding of optical components such as an ophthalmic lens.

Conventional component moulding processes often use injection moulding methods, whereby the required volume of polymerizable composition is forced through a nozzle into a closed mould assembly, which requires pressure equipment. On the contrary, in the new method casting is used, i.e. the polymerizable composition is introduced between the moulding surfaces of a mould without significant moulding pressure. This means that the moulding apparatus can be simplified substantially.

A moulding surface is understood to mean an interior, preferably polished, surface of a mould member, which should be brought into contact with the polymerizable composition and has a surface shape profile corresponding to a required surface profile of the moulded component.

The new method can be performed at arbitrary locations such as in optical shops. It is now possible that an ophthalmic lens, which may be an eyeglass lens, a contact lens or in intra-ocular lens, i.e. a lens to be placed within the eye behind the cornea, is made in an optical shop immediately after a customer has delivered his lens receipt or after the optician has determined which lens he needs. The waiting time for the customer can be reduced substantially. Moreover, since sending of a lens receipt to a final lens manufacturer such as an Rx lab and transportation of a vulnerable finished lens is no longer needed; the cost of an ophthalmic lens can be reduced.

With the new method different types of ophthalmic lenses can be produced such as spheric single vision, aspheric single vision, flattop bifocal or progressive multifocal lenses. Moreover, with the new method also other types of optical components can be produced and the method can be used wherever a de-centralised production of such components is required or provides advantages.

The method is further characterized in that a component-forming composition is used, which shows a total shrinkage of the order of 4%.

The total shrinkage comprises shrinkage caused by the transition of the monomers to the polymer and shrinkage, which occurs during curing of the polymer. The latter shrinkage is preferably lower than 1.5%.

Shrinkage of the composition is a serious problem that occurs especially when the composition is heated to a high temperature to accelerate curing of the composition. Classical curing processes using conventional polymerizable compositions, which comprise monomers in liquid form, are known to develop some flaws. The polymerisation reaction results in severe volume shrinkage, which causes the component formed to delaminate from the moulding surface, or the appearance of cracks or strains in the component formed. Moreover, the supplied heat results in severe yellowing of the component formed, which means that a clear component will become yellow.

The problem of shrinkage that occurs during curing of organic plastics, particularly exothermic plastics has been widely recognised and has been addressed in a number of documents. For example in U.S. Patent 6,790,916 shrinkage equal to or lower than 3.5% is reported. However this patent is not concerned with polymerizable compositions showing good optical qualities, but with materials having, in addition to low shrinkage, good mechanical properties and still high elasticity at low temperatures. In documents, which are concerned with polymerizable compositions having good optical properties, such as PCT patent application WO 01/31584 a minimum shrinkage of about 10% is mentioned. Moreover, a polymerisation time from one hour to hundred hours is reported.

The shrinkage of the new composition may deviate from the said 4%, essential is that the composition shows shrinkage, which is considerably lower than the shrinkage of conventional compositions having similar optical qualities. After the moulded composition has cooled down at the end of the moulding cycle it can easily be released.

In principle all optical component-forming compositions having shrinkage in the order of 4% can be used. However, the new method is preferably characterized in that a component-forming composition is used, which comprises a two-component polyurethane system.

It has been demonstrated that with such a composition good results can be obtained.

Additional components may be included in the composition to improve its polymerisation and release from the mould member(s) and to protect the moulded component against environmental influences.

Preferably, the method is further characterized in that the component-forming composition is heated to a temperature in the range of 130-160°C during the curing step.

It has been shown that at such temperatures a polyurethane composition can be reacted to a cured polymer in a length of time of 30-120 seconds, depending on the volume of the composition, which is extremely short compared with reaction times of conventional compositions. It is the very small shrinkage of the used composition that allows the use of the high temperature.

With respect to the heating of the polymerizable composition several embodiments of the method can be distinguished.

A first embodiment is characterized in that the component-forming composition is heated by means of electrical heating the moulding surface of the at least one mould member.

It is remarked that electrical heating of mould inserts is known per se, for example from U.S. Patent 5,261,806. This document describes a moulding system wherein interchangeable mould inserts each having its own electrical heater bands and associated wiring are used, which allows easy switching from one production job to another. The heater bands are wrapped around the mould inserts. The polymerizable composition is loaded in the mould cavity by injection. No details are given about the type of products that are moulded, the polymerizable composition that is used, the polymerisation time and the shrinkage.

Preferably the first embodiment is characterized in that use is made of at least one mould member having the shape of a shell, which includes the moulding surface and is provided with an electric resistive heating coating, which is connected to an electrical power source.

The first embodiment is more preferably characterized in that the heating coating is a film of Al₂O₃.

It is remarked that U.S. Patent 5,569,474 discloses what, for an optimum heating effect, the value of the surface resistivity should be as a function of the surface dimensions, the maximum value of the allowable voltage, the maximum value of the allowable current and the input power. This document relates to a mould assembly comprising a stationary and a moving mould member, each of which is provided with a mould insert. The moving mould insert is provided with a thin film electric resistor, which is connected via connecting bolds to an electric power source to heat the moulding surface of the mould insert. This mould assembly is intended to be used in an injection moulding apparatus and the film resistor is made of one the materials TiN, TiC, TiCn, TiAIN and CrN. The advantage of an Al₂O₃ film heater used with the new method is that this film can be heated very fast to the required temperature.

A second embodiment of the method is characterized in that the component-forming composition is heated by means of a high frequency electromagnetic field.

Such an electromagnetic field, at a frequency at which the OH molecules of the composition react, for example a frequency between 10⁸ and 10¹⁰ Hz, can be generated by means of an electric coil arranged in the vicinity of the mould inserts. For example the mould assembly including the component forming composition can be placed in a microwave oven, also called a magnetron, which nowadays is a simple consumer apparatus.

The use of a microwave oven to heat a polymerizable composition in a process for manufacturing a contact lens is known from U.S. patent 4,879,072. However, in the process of this document first a lens pre-form is made of a protein biological material at a temperature between ambient temperature and the temperature at which the material liquefies. The preform is then placed in a mould and its material is liquefied by exposing it to the high frequency electromagnetic field so that it acquires the final lens shape. The material is then gelified by cooling it in the mould. After being removed from the mould, the material should be cross-linked by contact with a cross-linking agent such as an aldehyde.

A third embodiment of the method is characterized in that the component-forming composition is heated by immersing the mould members including the component-forming composition in a medium heated to a temperature at which the composition polymerises very fast.

The medium may be oil that is heated to a temperature of, for example 130° C. Oil has been chosen because it can be heated to this high temperature. In conventional methods, the mould members are insulators and the component- forming composition, in the form of a liquefied monomer mixture, between the mould members is polymerised by immersing it in a volume of water heated to, for example 70° C and then cooled down. Polymerisation time is, for example of the order of 24 hours. The mould members used with the new method may be reduced to shells, which may be heat conducting and polymerisation time may be reduced to less than one minute due to the high temperature. By retracting the mould shells including the polymerised composition from the oil, the composition cools immediately.

Preferably the above-described embodiments of the method may be further characterized in that use is made of at least one mould member having a moulding surface, which shows the complete surface profile of the corresponding surface of the required component.

The complete surface profile is understood to mean the required surface profile for the finished lens or component. In case of a lens, this surface profile has in principle a spheric or aspheric shape on which a prismatic or cylindrical term may be superposed. A lens moulded by means of such a mould member needs no further shaping steps such as grinding and polishing. Also the surface quality of the moulding surface may be such that the required surface quality of the final lens is obtained by the moulding process.

To reduce the number of mould assemblies or mould members, a user of the method, such as an optical shop, should keep in stock, the method is preferably used in combination with at least one adaptable mould member having an adaptable moulding surface profile.

An adaptable moulding surface profile is understood to mean a surface profile that can be adapted to the profile of the lens or component to be moulded. The use of an adaptable mould in the manufacture of an eyeglass lens is known per se, for example from U.S. patent application 2003/0052425. The mould comprises a flexible membrane, which depth profile can be adjusted by means of varying a pressure exerted on the membrane by a fluid, for example a gas, that is in contact with the membrane. The profile of the membrane, thus that of the lens to be moulded, can be controlled by projecting a standard image through the membrane and comparing the resulting image with a calibration image.

The new method may be further characterized by the additional step of providing the moulded component with a hard coating.

The hard coating, which protects the lens or component for mechanical or other disturbances, may be an acrylic or silicon type hard coating. Such a coating may be supplied to the moulded lens by means of methods ordinary employed, such as dipping methods, spinning methods and spraying methods. The dipping method and the spinning method are especially preferred in view of the smoothness of the coating formed.

The method may also be further characterized by the additional step of providing the moulded component with an anti-reflective coating.

As known in the art, the anti-reflective coating may include a coating obtained by laminating a high refractive index layer and a low refractive index layer alternately. The high refractive index layer can most preferably be made of zirconium oxide. It can also be made of aluminium oxide, titanium oxide, cerium oxide, indium oxide, neodymium oxide or tantalum oxide. The low refractive index layer can most preferably be made of silicon oxide. It can also be made of magnesium fluoride. The lamination order of the layers can be an order of a high refractive index layer, a low refractive index layer etc, or reversed.

The polymerised lens obtained with the new method described above can be subjected to other treatments such as tinting.

The invention also relates to a system for moulding optical components by means of the method as described herein before and comprising a mould assembly having two mould members, which are arranged to define a mould cavity for receiving a polymerisable component-forming composition, at least one of the moulding members having a moulding surface profile corresponding to a required surface profile of the component to be moulded and means to accomplish polymerisation of the composition. This system is characterized in that the mould assembly is arranged such that it can be filled with a thermo-polymerisable composition without exerting force on the latter and in that the means to accomplish polymerisation comprises heating means far fast heating of the composition to a temperature higher than 110° C.

This system is unique in that it combines force less casting of the viscous component-forming composition with fast thermo-hardening, i.e. polymerising by means of heat, of the composition. In conventional fast moulding systems UV radiation is used for curing, or polymerising the component-forming composition.

A first embodiment of the system is characterized in that the heating means are constituted by electrical heating means for heating the side of at least one mould member, which side faces the composition during the polymerisation step.

A second embodiment of the system is characterized in that the heating means are constituted by means for creating a high frequency electromagnetic field.

Such heating means are known per se in the art of moulding lenses, however their use in a cast moulding system is novel.

The system may be further characterized in that the mould assembly comprises a gasket to hold the mould members and co-define the mould cavity

A gasket is well-known element in the lens moulding technology. It is understood to mean a spacing seal, for example made of plasticised polyvinyl chloride

With respect to their application, the embodiments of the system can be divided into two types.

A first type of system, which is intended for operation by hand, is characterized in that the heating means comprises a fluid container for containing a hot fluid and provided with fluid heating means, which container is configured to receive the mould assembly including the component-forming composition.

This type of system is very suitable for moulding lenses and other optical components at a small scale, because it comprises very simple means and requires only low investment so that it can be used in an optical shop or at other places where a limited number of optical elements should be produced. After the component-forming composition has been cast in the mould assembly, this assembly is immersed in a simple container filled with a liquid heated to a temperature at which the composition cures immediately. Thereafter the mould assembly including the moulded component can be cooled quickly, for example by means of cold water. Heating of the liquid in the container can be performed by various simple means, for example by means of a gas heating device or an electrical heating device. It is also possible to provide the wall of the container with an electric resist heating coating, for example of Al₂O₃, which is connected to an electrical power source.

A preferred embodiment of the first type of system is characterized in that the fluid is oil and in that the heating means are configured to heat the oil to a temperature of at least 120°C.

As already remarked at such temperatures the polymerisation time of the composition may be of the order of minutes, depending on the volume of the composition, thus on the size of lens or other optical component to be formed.

A further preferred embodiment of the first type of system is, characterized in that at least one of the mould members has the shape of a shell, which includes the moulding surface profile.

Using shells as mould members allows reducing the weight of the mould assembly and renders it easily manageable.

This embodiment may be further characterized in that the shell is provided with an electric resistive heating coating, which is connected to an electric power source.

In this way the component-forming composition within the shell(s) can easily be heated to the required temperature.

Preferably the latter embodiment is characterized in that the coating material is Al₂O₃.

This material can be heated to high temperatures within a very short time.

Although the main object of the invention is to provide a method and system for producing optical components at a small scale and with simple means, the features of the invention can also be used for large-scale production of such components. This results in a second type of system, which is characterized in that it is configured in the form of a cast-moulding machine comprising a machine frame, the mould assembly being mounted in the frame such that the mould members are movable relative to each other and in that at least one of the mould members is provided with heating means.

An embodiment of this system is characterized in that at least one of the mould members is provided with cooling means.

Such means allow fast cooling of the moulded component.

Another embodiment of this system is characterized in that at least one of the mould members comprises a member base and a mould insert, the heating means being arranged in the mould insert.

These and other aspects of the invention will be apparent from and elucidated by way of non-limitative example with reference to the embodiments described hereinafter. In the drawings;
Fig.1 shows a conventional mould assembly;
Fig.2 shows a first embodiment of the mould assembly for use in the moulding system according to the invention;
Fig.3 shows a second embodiment of the mould assembly for use in the moulding system according to the invention;
Fig.4 shows a third embodiment of the mould assembly for use in the moulding system according to the invention;
Fig.5 shows a mould member provided with heating means;
Fig. 6 shows a moulding apparatus for use in the moulding system according to the invention;
Fig.7 shows a temperature versus time curve of a component-forming composition;
Fig. 8 shows a mold member provided with cooling means;
Fig.9 shows moulding on a preform, and
Fig.10 shows an apparatus for simultaneously moulding and coating a component.
In these figures equivalent elements are denoted by the same reference numerals.

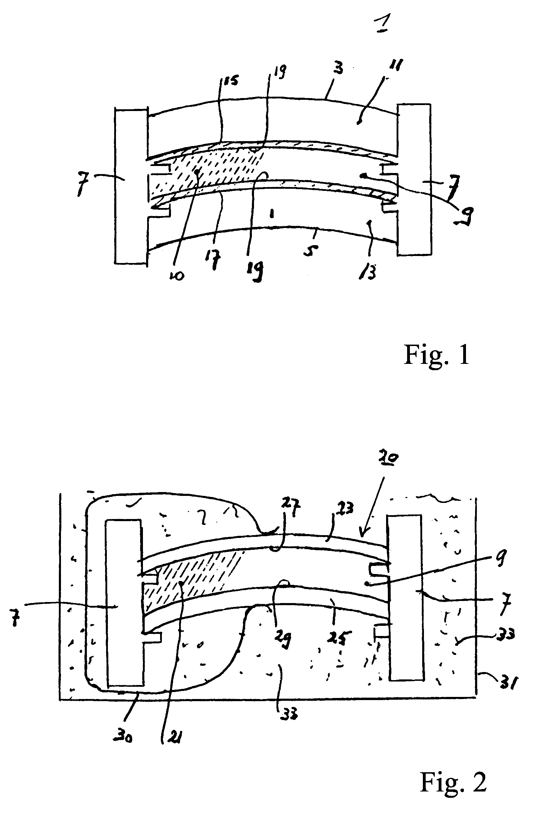

Fig. 1 shows a vertical cross-section of a conventional mould assembly 1 comprising a first mould member 3 and a second mould member 5. The mould members are retained by a gasket 7, which, together with the mould members 3 and 5, defines a mould cavity 9 for receiving a polymerizable component forming composition 10, of which only a half volume is shown in Fig.1. The gasket 7 may be made of rubber or plasticed polyvinyl chloride. The mould members 3 and 5 comprise a member base 11 and 13, respectively, which may be made of glass such as glass of the type BK7. The inner side 15 and 17 of the mould members 3 and 5, respectively form moulding surfaces and their surface profile is the mirror image of the corresponding surface of the component to be formed, in this embodiment a lens. Preferably, the inner sides of the mould members are metalled; i.e. coated with a layer 19 of, for example nickel (Ni), chromium (Cr) or silver (Ag). Such a layer prevents composition material from sticking to the mould member when the moulded lens is removed from the mould assembly and allows repetitive use of the mould member without intermittently cleaning.

The required surface profile at the inner side of the mould members may be obtained by machining, for example by grinding and/or polishing the inner surfaces of the bases of the mould members according to the specification of the lens to be formed. Since the metal layer 19 coated on the inner surface is thin, it shows the required surface profile. It is also possible to use a standard mould member base and to use for different mould inserts to produce lenses with different specifications. A mould insert, which is frequently used in the manufacture of plastic lenses, consists of a plate, one surface of which is adapted to the inner surface of a mould member base, whilst the opposite surface shows a profile that is the mirror image of the required lens surface profile.

By using the recently developed type of lens-forming composition and optimising the curing temperature and -time a new and dramatically improved lens moulding process is obtained. Since this composition shows a very low shrinkage, the above-mentioned problems, which are inherent to shrinkage, are avoided. Moreover, the moulded lens shows excellent optical quality and is scratch and impact resistant.

Fig. 2 shows a vertical cross-section of a first embodiment of a mould assembly that is especially suitable for use with the new moulding method. This mould assembly 20 differs from that of Fig. 1 in that shells 23 and 25 have replaced the massive mould members 3 and 5, respectively, whereby the inner surface 27 and 29, respectively of the shells constitute the moulding surfaces. Such shells provide the great advantage that they allow heating of the composition to the required temperature much faster than is possible with the mould assembly of Fig.1. The shells may be made of, for example nickel chromium and they may be contained in a gasket 7. The metal shells may be manufactured by first producing a glass master (mother mould) having the required surface profile and then replicating this profile in a final metal shell by means of well-known processes of sputtering and/or electroforming, possible via intermediate steps of forming sons etc.

For producing a lens, the mould cavity is filled with the recently developed type of polymerizable lens-forming composition 21, simply by casting this composition in the cavity. The composition, usually comprising two main components as will be described hereinafter, should have a sufficient low viscosity at a temperature of, for example 25 - 50°C. By casting the composition at such a temperature in the mould cavity, it is ensured that this cavity will be filled throughoutly and the inner shape of the mould cavity will determine the shape of the fmal lens. After the composition has been loaded in the mould cavity, polymerisation and curing starts.

According to the invention, the curing is substantially accelerated thermally whereby use is made of the fact that the component-forming composition used shows a very low shrinkage and can be heated to high temperatures. For example, if the composition is heated to a temperature of 130° C or higher the polymerisation time may be reduced to the order of minutes. After the polymerisation has been completed, the composition, i.e. the moulded lens is cooled down and subsequently the mould assembly is opened and the moulded lens is taken out. Enforced cooling of the moulded lens can be realised by immersing the mould assembly in a tank with cold water. After cooling down of the moulded lens the mould assembly can be opened and the lens be loosed by a simple pat on the assembly. Cooling down of the composition causes a very low shrinkage, which does not affect the shape of the moulded lens, but is sufficient to warrant easy loosening of the lens from the shells.

In this way a very effective use is made of the properties of the new type of lens-forming composition to arrive at a new type of lens moulding process. This process distinguishes from conventional processes in that it is very fast and can be carried out with simple means so that it can be easily used at a large number of non-specialised sites. The new composition can be easily cast without force, shows very low shrinkage, can be fast heated to high temperatures, shows superior optical qualities and can withstand mechanical forces. In case the new lens-forming composition is processed in the conventional way, i.e. with conventional curing temperature and -time, some of said properties are available.

During the polymerisation cycle the shells can be fixed, for example by means of a spring 30, which exerts an appropriate force on the shells.

For fast heating of the lens-forming composition to the required temperature several methods can be used. A first method is immersing the shells 23 and 25 including the liquefied composition in a tank 31 filled with oil 33 at a temperature of, for example 130°C, as schematically shown in Fig.2.

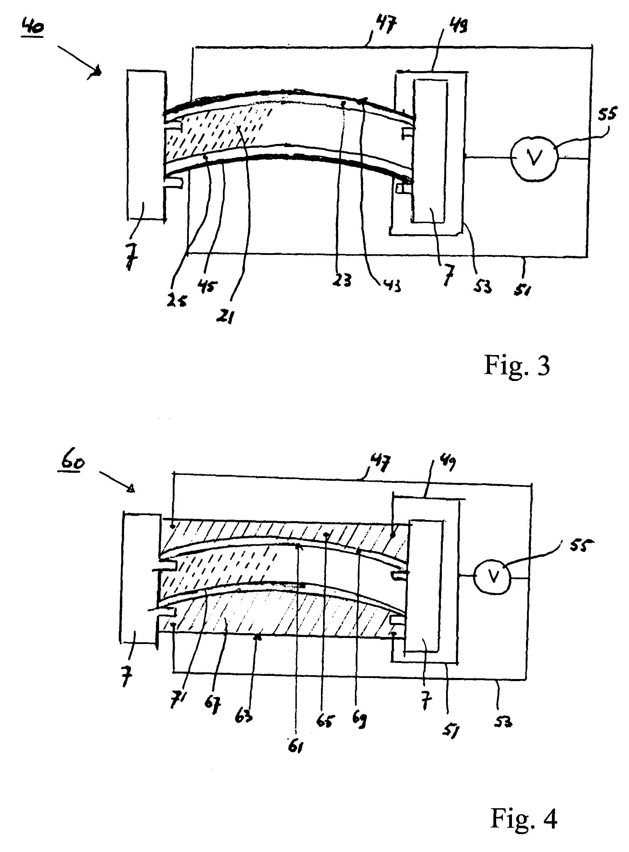

Fig.3 shows schematically a second method of fast heating the composition. The shells 23 and 25 of mould assembly 40 are provided with electrically resistive layers 43 and 45, which are connected by wiring 47, 49, 51 and 53 to an electrical power source 55. If the power source is switched on, the layers are heated very fast to the required temperature. They material of the layers is, for example Al₂O₃. This material has been proven to be very suitable for fast heating of an object with which it is in contact. This material is nowadays used in a heating element of an electrical water cooker. With respect to the requirement for the surface resistivity of the layer, reference is made to U.S. Patent 5,569,474. This document discloses what, for an optimum heating effect, the value of the surface resistivity should be as a function of the surface dimensions, the maximum value of the allowable voltage, the maximum value of the allowable current and the input power. U.S. Patent 5,569,474 relates to an injecting moulding apparatus and not to a casting moulding apparatus.

Fig.4 schematically shows another embodiment of a mould assembly 60, which is suitable for use with the new moulding method. This assembly comprises two mould members 61 and 63, each having a member base 65 and 67, respectively of an electrically conductive material such as aluminium or copper. The inner sides of the member bases are coated with a layer 69 and 71, respectively of, for example nickel, chromium or silver or another material, which prevents that composition material sticks to the mould member. The mould members 61, 63 and the polymerizable composition 21 between these members are heated to the required temperature, for example 110 to 130°C by connecting these members via wiring 49, 51, 53, 55 to an electrical power source 59, similar as in the embodiment of Fig.3.

During the polymerisation cycle the mould members can be fixed by means of a spring, in a way similar as shown in Fig.2. It is also possible to tighten the mould members in the gasket.

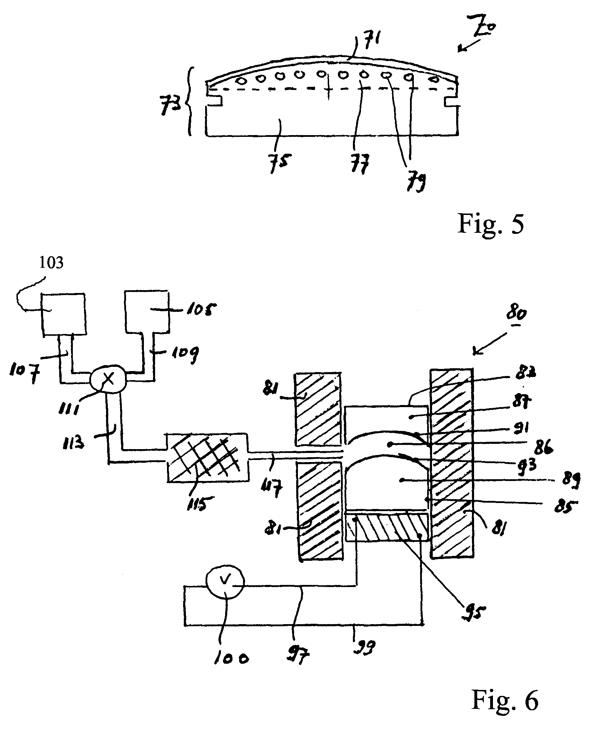

Fig.5 shows another type of mould member that is preferably used in the embodiment of Fig.4. The base 73of this mould member 70 comprises a thicker heat-insulating portion 75, which provides rigidness to the mould member, and a thin portion 77. The latter portion is provided with heating wires or bands, denoted by the small circles 79, to be connected to an electric power source, similar as shown in Fig.4. Since only the portion 77 and the layer 71 need to be heated, heating of the lens-forming composition can be performed faster and in a more efficient way as with the mould members shown in Fig.4.

Heating of the lens-forming composition within the mould cavity can also be performed by means of high frequency (HF) electromagnetic waves. In principle, such waves can be generated by an electrical coil, which is placed in the neighbourhood of the mould assembly. A more practical and low-cost alternative is to place, for curing the composition, the mould assembly in a microwave oven, which is a household appliance of frequent occurrence.

In the embodiments of Figs. 2-4 the moulding surfaces are concave and convex respectively so that the moulded lens is a convex/concave lens, which is the most usual type for an ophthalmic lens. Other types of lenses, such as bi-convex bi-concave, plano-convex and plano-concave lenses may also be produced if corresponding types of mould members are used. It will be clear that also optical component such as prisms or gratings may be produced. For producing a grating at least one of the moulding surfaces should be a ruled surface.

In a non-limiting example, a mould cavity as described herein before was filled with a low shrinkage two-component polyurethane mixture. This mixture may be a two-component polyurethane system as obtained from Great Lakes Chemical Corporation with code name DP143108. The first component A of DP143108 consists of a poly alcohol with a viscosity of 1.5 Pa.s and the second component B consists of an isocyanate functional pre-polymer with a viscosity of roughly 1 Pa.s. The two components A and B were thoroughly mixed in a pre-set ratio of 1:1.6 through a mixer into the mould cavity. Prior to mixing, the two components A and B were degassed and filtered over a 1 micron filter.
The temperature of the components A and B during mixing was maintained at 50°C. After the mould cavity was filled with the mixture, the latter was heated to 130°C and the polyurethane was reacted to the polymer and cured in 4 minutes.
The mould cavity was cooled down, opened and the moulded article was taken out.

The following table shows the physical properties of this article or component. This component shows good optical characteristics, like transmission, Abbe value and colour in comparison with a component made of RAV 7AT (diethylene bis allylcarbonate). The latter material, obtained from Great Lakes Chemical Corporation is the conventional standard material for producing plastic ophthalmic lenses. This material was cured with 27% Perkadox IPP-NS 10 from Akzo Nobel using a standard thermal cure in glass moulds of 21 hours with increasing temperature from 45°C to 80°C.

| **Property** | **Unit** | **Example** | **RAV 7AT** |
|---|---|---|---|
| hardness | Rockwell | 95 | 99 |
| Transmission | % | 91 | 92 |
| Yellowness index (4 mm) | YI | 0.2 | 0.9 |
| Abbe value | - | 53 | 58 |
| Index | N^{d}₂₀ | 1.503 | 1.501 |
| Total shrinkage during cure | Volume % | 1.5% | 12.4% |

The mould assemblies of Figs 2-5 are simple and lightweight and thus easy to handle. These assemblies can be used for moulding components by hand, in case a limited number of components have to be produced. The new moulding method can also be used with a moulding apparatus for mass moulding optical components.

Fig. 6 shows schematically an embodiment of such an apparatus in a vertical cross-section. The apparatus comprises a main frame 81, for example made of steel for receiving two mould members 83 and 85, which define a mould cavity 86. The mould members comprise a member base 87 and 89, respectively, for example made of an alloy of beryllium and copper or of aluminium. The inner sides of the member bases are coated with a layer 91 and 93, respectively of, for example nickel or chromium to warrant easy release of the moulded component and avoid sticking of composition to the mould members. The apparatus further comprises a heating element 95 of electrically resistive material, which is connected via wires 97 and 99 to an electrical power source 100. If this power source is switched on, the polymerizable composition within the mould cavity will be heated in short time to the required temperature by the heating element 95 via the mould member 89. The time for heating can be further decreased by arranging a second heating element (not shown in Fig. 6) at the side of the mould member 83.

For heating the mould cavity use can be made also of a number of heating elements included in the base of the mould member(s).

Instead of with an electrical heating element, such as element 95 in Fig.6, the apparatus may be provided with an electrical coil in the neighbourhood of the mould cavity to generate high frequency waves by means of which the composition within the cavity can be heated. It is also possible to use the induction principle to heat the component forming composition in the mould cavity. The left-hand part of Fig.6 schematically shows how the component-forming composition is supplied to the mould cavity 86. The constituents of the composition, herein above called components A and B, are received separately by the optical component manufacturer; this is indicated in the Fig.6 by two reservoirs 103 and 105, which contain component A and component B, respectively. Via conduits 107 and 109 the components are supplied to a tap 111, which if opened combines the two components. The combined components are supplied via a conduit 113 to a mixer 115, which mixes the components thoroughly so that the required composition is obtained. This composition is supplied via conduit 117 in the mould cavity 86. A similar configuration can be used to fill the mould cavity of the moulds shown in Figs.2-6 for manually moulding process.

The new type of composition described herein above shows a low viscosity and, preferably, is mixed and supplied to the mould cavity at a temperature in the range of 50°C to 60°C. This allows an optimum filling of the mould cavity without using pressure. For moulding a component no high pressure is needed. Moreover, since the component-forming composition shows very low shrinkage, the shrinkage compensation, which is needed to prevent prematurely loosing of the component from the mould insert(s) is very small and can be realised by very simple means. As a result, the apparatus, which is used in combination with the new type of component-forming composition to perform the new moulding method, is unique and considerably less complex than a conventional moulding apparatus, be it a thermo-moulding apparatus or an UV moulding apparatus.

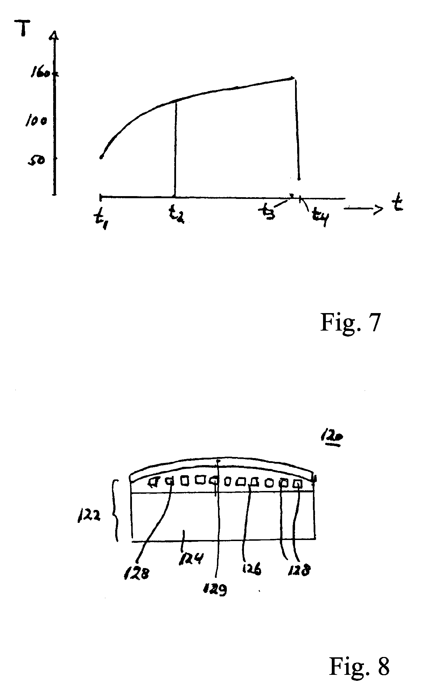

Fig.7 shows the heating curve of the new type of component-forming composition, i.e. the variation if its temperature T as a function of time t during a heating cycle. At moment t₁ the mould cavity has been filled with the composition, which has a temperature, for example in the order of 50°C. At moment t₃ the temperature of the composition has reached the required value of, for example of the order of 160°C. The process may be designed such that at moment t₁ there is a tolerance, or free space between the composition and the walls of the mould cavity of, for example 1-3 m. If further at moment t₂ the tolerance is zero, it will be, for example, 5 m at moment t₄, when the component has cooled down. This means that the component formed is free from the cavity walls and can easily be taken out. Such a design may also be used in the manual moulding process using the mould assemblies shown in Figs. 2-5.

Another aspect of the moulding apparatus is that a very effective use can be made of the fact that the apparatus frame and the mould members are made of different materials. The coefficient of expansion of these materials, for example steel for the frame and beryllium/copper for the mould members, may be chosen such that during heating the mould members are clamped by the frame, whilst during cooling down the mould members are freed from the frame. In this way the mould members can be fixed in the required positions without using additional fixing means.

This idea is generally useable in the field of moulding components. If, under certain circumstances there is no need for such a clamp, the inner walls of the frame may be coated with a heat-insulating material such as Teflon.

Since the new type of composition can be heated in a very short time, in the order of minutes, to high temperatures, in the range of 110°C to 160°C, the polymerisation and curing of a component can be realised in a very short time interval so that the throughput of the apparatus is very high. Throughput is understood to mean the number of components that can be produced in a time unit.

To accelerate cooling down of the component-forming composition after a component has been formed, the apparatus may be provided with enforced-cooling means. Such means may be incorporated in a mould member as shown in Fig.8. The base 122 of the mould member 120 comprises a lower, thicker, portion 124, which provides rigidity to the mould member, and an upper portion 124. The lower portion 124 may be made of an electrically insulating material. The upper portion 126 is provided with conduits 128 through which a cooling medium, such as cold water, can be guided or pressed, immediately after the composition within the mould cavity has polymerised and cured. In the embodiment of Fig.8 the mould member comprises a thin insert 128 on top of the divide base member. It is also possible to use a thicker insert and to arrange conduits for the cooling medium in this insert. Then a single member base can be used.

Cooling down of the moulded component can also be performed by means of enforced air cooling, for example by a ventilator. This type of cooling may also be used in the manual moulding process using the mould assemblies shown in Figs. 2-5.

The apparatus of Fig.6 is shown only as an example of a thermo moulding apparatus. For the person skilled in the art it will be clear that such an apparatus may be modified in many ways and that a number of alternatives can be used for the different apparatus parts.

The new method of moulding allows moulding of end products, i.e. products, such as lenses or optical components, which have their final shape, surface profile and surface quality. Due to the low viscosity of the component-forming composition during casting into the mould cavity, the composition exactly follows the surface profiles of the mould members. If the mould members surfaces have end-profile and end-quality, moulded component will also have such a profile and quality, due to a/o the very low shrinkage of the composition.

The new method of moulding can be made even more attractive if adaptable mould members or mould inserts are used. The profile of the moulding surface, i.e. its curvature or the shape and dimension of a cylindrical or prismatic term if needed, of such a mould can be adapted to a required profile of a surface of the component to be moulded. This allows reducing the number of mould members or mould inserts the user of the method and apparatus should keep in stock to be able to produce a variety of components. Developments on adaptable moulds are going on and look promising. For example, the adaptable mould disclosed in U.S. patent application 2003/0052425 can be used with the new moulding method. This mould comprises a flexible membrane, which depth profile can be adjusted by means of varying a pressure exerted on the membrane by a fluid, for example a gas, that is in contact with the membrane. The profile of the membrane, thus that of the lens to be moulded, can be controlled by projecting a standard image through the membrane and comparing the resulting image with a calibration image.

The present moulding process can not only be used for producing complete components, but also for moulding layers on a so-called preform or blank. A preform is understood to mean an intermediate component, which already has a base shape, which shape, on the one hand, approaches as far as possible the shape of the end component and, on the other hand is common to a number of different end components. The intermediate components may be manufactured in mass and at low costs, for example of glass, by techniques other than moulding. The end surface profile and quality of the required component is obtained by moulding a relative thin layer on the intermediate component. The refractive index of the moulded (plastic) layer will usually differ from that of intermediate component, but this will have a negligible effect on the optical quality of the end component, because the thickness of layer is considerably smaller than that of the end component. Since moulding a layer on a preform means that considerable less mass of composition has to be polymerised, such a moulding requires even less polymerisation time than moulding a complete component.

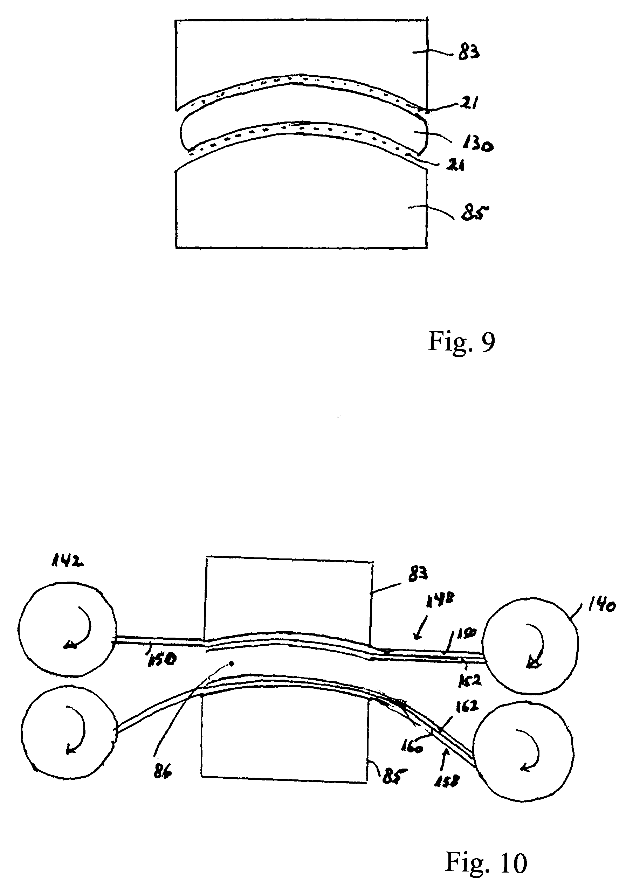

Fig.9 shows two mould members 83 and 85 between which a preform 130 is arranged. The spaces between the preform and the mould member has been filled with the polymerisable composition 21 so that polymerisation can start. After polymerisation has been finished, the layers 21 have become part of the component 130, which has become an end component. The outer surface profile of the layers and thus of the end component correspond to the inner profiles of the mould members.

If required a component moulded by means of the new method may be coloured. It may also be provided with a hard coating to make it scratch and wear resistant and/or with an anti-reflective coating. In case the component comprises the two coatings, the hard coating is provided firstly. For the colouring and coatings conventional techniques may be used.

Especially in case an moulding apparatus, such as that shown in Fig. 6 is used, the said coating(s) can be furnished in the form of a film, which is present between the mould members during the polymerisation cycle, which film will be fixed to the moulded component. This method of coating during polymerisation, which is known per se from DE Patent Application 198 58 849, can be optimised for the present moulding method as schematically shown in Fig.10. Like the apparatus of Fig.6, the apparatus shown in Fig.10 comprises a first mould member 83 and a second mould member 85. In addition thereto, the apparatus of Fig.10 comprises a first unwind spool 140 and a first wind up spool 142 to transport a film 148 across the mould cavity 86 defined by the mould members 83 and 85 via openings in the frame (not shown in this Figure). The film 148 comprises a film base 150 and a layer 152. During a polymerisation cycle the component-forming composition presses the portion of the film at the location of the mould member 83 against the moulding surface of this mould member 83 so that it follows the profile of the moulding surface. After polymerisation of the composition this portion of the layer 152 is fixed to one side of the moulded component and removed from the film base. After the component has been removed from the mould assembly, the film is transported, by means of the spools 140 and 142, such that a subsequent portion of the film is located at the position of the mould member 83. The layer 152 on the film base may be a single layer: a hard coat layer or an anti-reflective layer. The layer 152 may also be a double layer consisting of a hard coat sub-layer and an anti-reflective sub-layer.

The apparatus may comprise a second unwind spool 154 and a second wind up spool 156 to transport a second film 158 having a film base 160 and a layer 162, along the second mold member 85 so that a second side of the component can be provided with a hard coating and/or anti-reflective coating.

In this way the total production time of a component can be further reduced.

## Claims

1. A method of moulding optical components, which method comprises the steps of:
- providing a polymerizable component forming composition;
- providing a mould assembly comprising at least one mould member having a moulding surface profile, which corresponds to a required surface profile of the component to be formed;
- loading a required amount of the composition in the mould assembly;
- causing the composition to polymerise in the mould assembly so that it solidifies to a solid component having a shape corresponding to the profile of the at least one mould member, and
- removing the solidified component from the mould assembly, **characterized in that**:
- the step of providing a polymerizable composition comprises providing a thermo-curable composition having unconventional low shrinkage;
- the step of causing the composition to polymerise comprises fast heating the composition to a temperature higher than 110° C so that the composition solidifies at an unconventional fast rate, and
- the step or removing comprises cooling down the solidified component and releasing it from the at least one mould member.

2. A method as claimed in claim 1, **characterized in that** a component-forming composition is used, which shows shrinkage of the order of 4%.

3. A method as claimed in claim 1 or 2, **characterized in that** a component-forming composition is used, which comprises a two-component polyurethane system.

4. A method as claimed in claim 1, 2 or 3, **characterized in that** the component-forming composition is heated to a temperature in the range of 130-160°C during the curing step.

5. A method as claimed in any one of claims 1-4, **characterized in that** the component-forming composition is heated by means of electrical heating the moulding surface of the at least one mould member.

6. A method as claimed in claim 5, **characterized in that** use is made of at least one mould member having the shape of a shell, which includes the moulding surface and is provided with an electric resistive heating coating, which is connected to an electrical power source.

7. A method as claimed in claim 6, **characterized in that** the heating coating is a film of Al₂O₃.

8. A method as claimed in any one of claims 1-4, **characterized in that** the component-forming composition is heated by means of a high frequency electromagnetic field.

9. A method as claimed in any one of claims 1-4, **characterized in that** the component-forming composition is heated by immersing the mould members including the component-forming composition in medium heated to a temperature at which the composition polymerises very fast.

10. A method as claimed in any one of claims 1-9, **characterized in that** use is made of at least one mould member having a moulding surface, which shows the complete surface profile of the corresponding surface of the required component.

11. A method as claimed in any one of claims 1-10, **characterized in that** use is made of at least one mould member having an adaptable moulding surface profile.

12. A method as claimed in any one of claims 1-11, **characterized by** the additional step of providing the moulded component with a hard coating.

13. A method as claimed in any one of claims 1-12, **characterized by** the additional step of providing the moulded component with an anti-reflective coating.

14. A system for moulding optical components by means of the method as claimed in claim 1, and comprising a mould assembly having two mould members, which are arranged to define a mould cavity for receiving a polymerisable component-forming composition, at least one of the moulding members having a moulding surface profile corresponding to a required surface profile of the component to be moulded and means to accomplish polymerisation of the composition, **characterized in that** the mould assembly is arranged such that it can be filled with a thermo-polymerisable composition without exerting force on the latter and **in that** the means to accomplish polymerisation comprises heating means far fast heating of the composition to a temperature higher than 110° C.

15. A system as claimed in claim 14, **characterized in that** the heating means are constituted by electrical heating means for heating the side of at least one mould member, which side faces the composition during the polymerisation step.

16. A system as claimed in claim 15, **characterized in that** the heating means are constituted by means for creating a high frequency electromagnetic field.

17. A system as claimed in claim 14, 15 or 16, **characterized in that** the mould assembly comprises a gasket to hold the mould members and co-define the mould cavity.

18. A system as claimed in claim 14, 15, 16 or 17 for operation by hand, **characterized in that** the heating means are constituted by a fluid container for containing a fluid and provided with fluid heating means, which container is configured to receive the mould assembly including the component-forming composition.

19. A system as claimed in claim 18, **characterized in that** the fluid is oil and **in that** the heating means are configured to heat the oil to a temperature of at least 120°C.

20. A system as claimed in claim 14, **characterized in that** at least one of the mould members has the shape of a shell, which includes the moulding surface profile.

21. A system as claimed in claim 20, **characterized in that** the shell is provided with an electric resistive heating coating, which is connected to an electric power source.

22. A system as claimed in claim 20, **characterized in that** the coating material is Al₂O₃.

23. A system as claimed in claim 14, 15, 16, 20, 21 or 22 for mass production of optical components **characterized in that** it is configured in the form of a cast-moulding machine comprising a machine frame, the mould assembly being mounted in the frame such that the mould members are movable relative to each other and **in that** at least one of the mould members is provided with heating means.

24. A system as claimed in claim 23, **characterized in that** at least one of the mould members is provided with cooling means.

25. A system as claimed in claim 23 or 24, **characterized in that** at least one of the mould members comprises a member base and a mould insert, the heating means being arranged in the mould insert.

## Amended claims

### Amended claims in accordance with Rule 86(2) EPC.

**1.** A method of moulding optical components, which method comprises the steps of:
- providing a polymerizable component forming composition;
- providing a mould assembly comprising at least one mould member having a moulding surface profile, which corresponds to a required surface profile of the component to be formed;
- loading a required amount of the composition in the mould assembly;
- causing the composition to polymerise in the mould assembly so that it solidifies to a solid component having a shape corresponding to the profile of the at least one mould member, and
- removing the solidified component from the mould assembly, **characterized in that**:
- the step of providing a polymerizable composition comprises providing a thermo-curable composition comprising a two-component polyurethane system having a low shrinkage of the order of 4%;
- the step of causing the composition to polymerize comprises heating the composition to a temperature higher than 110°C during less than 30 minutes thereby solidifying the composition at a fast rate, and
- the step of removing comprises cooling down the solidified component and releasing it from the at least one mould member.

**2.** A method as claimed in claim 1, **characterized in that** the component-forming composition is heated to a temperature in the range of 130-160°C during the curing step.

**3.** A method as claimed in any one of claims 1 or 2, **characterized in that** the component-forming composition is heated by means of electrical heating the moulding surface of the at least one mould member.

**4.** A method as claimed in claim 3, **characterized in that** use is made of at least one mould member having the shape of a shell, which includes the moulding surface and is provided with an electric resistive heating coating, which is connected to an electrical power source.

**5.** A method as claimed in claim 4, **characterized in that** the heating coating is a film of Al₂O₃.

**6.** A method as claimed in any one of claims 1 or 2, **characterized in that** the component-forming composition is heated by means of a high frequency electromagnetic field.

**7.** A method as claimed in any one of claims 1 or 2, **characterized in that** the component-forming composition is heated by immersing the mould members including the component-forming composition in medium heated to a temperature at which the composition polymerises very fast.

**8.** A method as claimed in any one of claims 1-7, **characterized in that** use is made of at least one mould member having a moulding surface, which shows the complete surface profile of the corresponding surface of the required component.

**9.** A method as claimed in any one of claims 1-8, **characterized in that** use is made of at least one mould member having an adaptable moulding surface profile.

**10.** A method as claimed in any one of claims 1-9, **characterized by** the additional step of providing the moulded component with a hard coating.

**11.** A method as claimed in any one of claims 1-10, **characterized by** the additional step of providing the moulded component with an anti-reflective coating.

**12.** A system for moulding optical components by means of the method as claimed in claim 1, and comprising a mould assembly having two mould members, which are arranged to define a mould cavity for receiving a polymerizable component-forming composition, at least one of the moulding members having a moulding surface profile corresponding to a required surface profile of the component to be moulded and means to accomplish polymerization of the composition, **characterized in that** the mould assembly is arranged such that it can be filled with a thermo-polymerizable composition, comprising a two-component polyurethane system, without exerting force on the composition and **in that** the means to accomplish polymerization comprises heating means far heating the composition to a temperature higher than 110°C during less than 30 minutes.

**13.** A system as claimed in claim 12, **characterized in that** the heating means are constituted by electrical heating means for heating the side of at least one mould member, which side faces the composition during the polymerisation step.

**14.** A system as claimed in claim 13, **characterized in that** the heating means are constituted by means for creating a high frequency electromagnetic field.

**15.** A system as claimed in claim 12, 13 or 14, **characterized in that** the mould assembly comprises a gasket to hold the mould members and co-define the mould cavity.

**16.** A system as claimed in claim 12, 13, 14 or 15 for operation by hand, **characterized in that** the heating means are constituted by a fluid container for containing a fluid and provided with fluid heating means, which container is configured to receive the mould assembly including the component-forming composition.

**17.** A system as claimed in claim 16, **characterized in that** the fluid is oil and **in that** the heating means are configured to heat the oil to a temperature of at least 120°C.

**18.** A system as claimed in claim 12, **characterized in that** at least one of the mould members has the shape of a shell, which includes the moulding surface profile.

**19.** A system as claimed in claim 18, **characterized in that** the shell is provided with an electric resistive heating coating, which is connected to an electric power source.

**20.** A system as claimed in claim 18, **characterized in that** the coating material is Al₂O₃.

**21.** A system as claimed in claim 12, 13, 14, 18, 19 or 20 for mass production of optical components **characterized in that** it is configured in the form of a cast-moulding machine comprising a machine frame, the mould assembly being mounted in the frame such that the mould members are movable relative to each other and **in that** at least one of the mould members is provided with heating means.

**22.** A system as claimed in claim 21, **characterized in that** at least one of the mould members is provided with cooling means.

**23.** A system as claimed in claim 21 or 22, **characterized in that** at least one of the mould members comprises a member base and a mould insert, the heating means being arranged in the mould insert.
